# EUROPÄISCHE PATENTSCHRIFT

(11) **EP 0 408 990 B1**
(45) Veröffentlichungstag und Bekanntmachung des Hinweises auf die Patenterteilung: **11.03.1998**
(21) Anmeldenummer: 90112777.9
(22) Anmeldetag: 04.07.1990
(51) Int. Cl.: C08G 59/32, C08G 59/40, C08G 18/58

(54) **Hitzehärtbare Reaktionsharzmischungen**
Thermosetting reaction resin mixture
Mélange de résines réactives thermodurcissables

(30) Priorität: 19.07.1989 DE 3923915
(43) Veröffentlichungstag der Anmeldung: 23.01.1991
(73) Patentinhaber: SIEMENS AKTIENGESELLSCHAFT, 80333 München (DE)
(72) Erfinder: von Gentzkow, Wolfgang, Dr., D-8524 Kleinsendelbach (DE); Huber, Jürgen, D-8520 Erlangen (DE); Rogler, Wolfgang, Dr., D-8521 Möhrendorf (DE); Wilhelm, Dieter, Dr., D-8550 Forchheim (DE)

(56) Entgegenhaltungen:
- EP-A- 384 939
- DE-A- 2 538 675
- DE-A- 2 543 386
- DE-A- 3 323 153
- US-A- 3 334 110
- US-A- 3 737 406
- PATENT ABSTRACTS OF JAPAN vol. 1, no. 28 28. März 1977 & JP-A-51 143 620 ( MATSUMOTO SEIYAKU KOGYO K.K. ) 10. Dezember 1976

## Beschreibung

Die Erfindung betrifft hitzehärtbare Reaktionsharzmischungen sowie daraus hergestellte Reaktionsharzformstoffe.

In der Elektrotechnik spielen Epoxidharze, insbesondere säureanhydridhärtbare Epoxidharze, eine bedeutende Rolle; sie finden nämlich als lösungsmittelfreie Reaktionsharze in vielen Einsatzgebieten Verwendung, insbesondere zu Isolierzwecken. So werden Epoxidharze zur Herstellung von Isolierbauteilen, zur Isolierung elektrischer Wicklungen und zur Abdeckung und Umhüllung elektronischer Bauelemente und Baugruppen eingesetzt sowie in Schichtwerkstoffen. Die aus Epoxidharzen hergestellten Reaktionsharzformstoffe besitzen vergleichsweise gute thermisch-mechanische Eigenschaften. Der in jüngster Zeit in der Elektronik immer stärker werdende Trend zu höheren Leistungen pro Volumeneinheit bzw. zur Miniaturisierung bedingt aber einen sowohl nach hohen als auch nach tiefen Temperaturen immer weiter werdenden Einsatzbereich für Epoxidharzformstoffe. Dies erfordert Formstoffe mit noch besseren thermisch-mechanischen Eigenschaften, wie etwa verbesserte Temperaturwechselbeständigkeit bei gleichzeitig erhöhter Wärmeformbeständigkeit (Glasübergangstemperatur).

Die genannten Anforderungen lassen sich durch Harzzusammensetzungen aus polyfunktionellen Epoxiden (EP) und polyfunktionellen Isocyanaten (IC) erfüllen. In Gegenwart geeigneter Härtungskatalysatoren polymerisieren derartige Zusammensetzungen zu wärmeformbeständigen Reaktionsharzformstoffen, die im wesentlichen aus Oxazolidinonstrukturen (OX) und Isocyanuratstrukturen (ICR) aufgebaut sind (siehe dazu beispielsweise: DE-OS 25 43 386, DE-OS 33 23 153 und DE-OS 36 00 764). Durch Variation des Ausgangsmolverhältnisses der Epoxid- und Isocyanatfunktionen, durch die Art des Reaktionsbeschleunigers, d.h. des Härtungskatalysators, und durch die Wahl geeigneter Härtungstemperaturen lassen sich der Gehalt an OX- bzw. ICR-Strukturen und damit die Eigenschaften der OX/ICR-Formstoffe in weiten Grenzen variieren. Beim Einsatz von EP/IC-Harzmischungen mit einem hohen Überschuß an der Isocyanatkomponente, beispielsweise EP:IC < 0,2, werden Formstoffe erhalten, die überwiegend aus ICR-Strukturen aufgebaut sind. Derartige Formstoffe zeichnen sich zwar durch sehr hohe Glasübergangstemperaturen (> 260°C) aus, sie zeigen jedoch relativ schlechte mechanische Eigenschaften, beispielsweise eine niedrige Schlagzähigkeit. Werden dagegen EP/IC-Harze mit einem EP:IC-Molverhältnis von 1 zusammen mit Imidazolen als Härtungskatalysatoren verwendet, so erhält man Formstoffe mit einem hohen Oxazolidinongehalt (OX: ICR > 1) mit ausgezeichneten mechanischen Eigenschaften bei gleichzeitig hohen Glasübergangstemperaturen von ca. 200°C. Überwiegend aus ICR-Strukturen aufgebaute OX/ICR-Formstoffe eignen sich sehr gut als wärmeformbeständige und dauertemperaturbeständige Wicklungsisolierungen für elektrische Maschinen und zum Aufbau hochwertiger Schichtwerkstoffe, während füllstoffhaltige OX/ICR-Formstoffe mit einem OX:ICR-Verhältnis > 1 aufgrund ihrer ausgezeichneten mechanischen Eigenschaften und Temperaturwechselbeständigkeit sehr gut zur Herstellung von Isolierbauteilen sowie zum Verguß und zur Umhüllung elektronischer Bauteile geeignet sind.

Zur Einhaltung nationaler und internationaler Brandschutzvorschriften müssen Polymerwerkstoffe in der Elektrotechnik, speziell in der Elektronik, zunehmend häufiger schwerbrennbar bzw. selbstverlöschend sein. Dazu wird das Bestehen einer der härtesten Materialprüfnormen gefordert, nämlich die Brennprüfung nach Underwriter-Laboratories-Norm UL 94V, und zwar mit der Einstufung V-O. Bei dieser Prüfung werden je fünf vertikal gehalterte Normprüfkörper zweimal je 10 s am unteren Ende beflammt. Die Summe der zehn bis zum Verlöschen gestoppten Nachbrennzeiten muß < 50 s sein und kein Einzelwert darf 10 s überschreiten. Diese Forderung ist schwer zu erfüllen, vor allem wenn es, wie in der Elektronik üblich, um dünne Wandstärken von 1,6 mm und weniger geht.

Es ist seit langem bekannt, daß stickstoffhaltige heterocyclische Strukturen, wie Oxazolidinon- und Isocyanuratstrukturen, die Brennbarkeit von Reaktionsharzformstoffen herabsetzen. So sind beispielsweise aus der DE-OS 23 59 386 OX/ICR-Formstoffe mit hoher Wärmeformbeständigkeit, ausgezeichneter Dauerwärmebeständigkeit und schwerbrennbaren bzw. selbstverlöschenden Eigenschaften bekannt; nähere Spezifizierungen sind aber nicht angegeben. Eigene Untersuchungen haben jedoch gezeigt, daß die flammhemmenden Eigenschaften solcher Reaktionsharzformstoffe selbst bei einem Gehalt von 65 bis 70 % an anorganischen Füllstoffen, wie Quarzmehl und Dolomit, nicht ausreichen, um bei Wandstärken von 1,6 mm eine Einstufung nach UL 94V-0 zu ergeben.

Bekannt ist ferner die Verwendung von EP/IC-Harzen zur Herstellung von Schaumstoffen mit guter Flammfestigkeit. In der DE-OS 25 51 631 ist die Herstellung von Polymeren mit Oxazolidinon- und Carbodiimidstrukturen beschrieben, die einen LOI-Wert (Limiting Oxygen Index) bis etwa 27 aufweisen. In "J. Cell. Plastics", Vol. 13 (1977), Seiten 399 bis 403, wird über Untersuchungen zur Schwerbrennbarkeit von oxazolidinonmodifiziertem Isocyanuratschaum berichtet; dabei werden für OX/ICR-Schaumstoffe mit einem 8 bis 10fachen Überschuß an Isocyanat LOI-Werte von 26 bis 28 angegeben. Die LOI-Werte für bekanntermaßen schwerbrennbare Materialien mit der Einstufung V-O, wie Polysulfone (LOI = 30), Polyvinylchlorid (LOI = 42), Polyvinylidenchlorid (LOI = 60) und Polytetrafluorethylen (LOI = 95), liegen jedoch wesentlich höher (siehe dazu: D.W. v. Krevelen "Properties of Polymers", Elsevier Scientific Publishing Comp., Amsterdam, Oxford, New York, 1976, Seiten 526 ff.).

Alle bisher bekannten aus EP/IC-Harzen hergestellte OX/ICR-Formstoffe haben den Nachteil, inhärent nicht ausreichend schwerbrennbar zu sein. Sie erfüllen nämlich nicht die in der Elektrotechnik - und besonders in der Elektronik - unverzichtbare Forderung, die Brandprüfung nach UL 94V mit der Einstufung V-O auch in Schichtstärken von 1,6 mm und kleiner zu bestehen. Es sind nun viele grundsätzliche Möglichkeiten bekannt, wie die Schwerbrennbarkeit von Reaktionsharzformstoffen zu verbessern ist. In Epoxidharzformstoffen werden häufig erhebliche Anteile kernbromierter aromatischer Epoxidharz-Komponenten oder halogenierte Additive und hohe Konzentrationen an Antimontrioxid zur schwerbrennbaren Einstellung verwendet. Die Problematik bei diesen Verbindungen besteht darin, daß sie einerseits zwar als Flammschutzmittel hervorragend wirksam sind, andererseits aber auch sehr bedenkliche Eigenschaften besitzen. So steht Antimontrioxid auf der Liste der krebserregenden Chemikalien, und aromatische Bromverbindungen spalten bei der thermischen Zersetzung nicht nur Bromradikale und Bromwasserstoff ab, die zu starker Korrosion führen, bei der Zersetzung in Gegenwart von Sauerstoff können insbesondere die hochbromierten Aromaten vielmehr auch die hochtoxischen Polybromdibenzofurane und Polybromdibenzodioxine bilden. Erhebliche Schwierigkeiten bereitet außerdem die Entsorgung von bromhaltigen Altwerkstoffen und Giftmüll.

Es wurde ferner bereits der Zusatz folgender Füllstoffe vorgeschlagen bzw. der teilweise Ersatz von herkömmlichen anorganischen Füllstoffen durch derartige Stoffe: Füllstoffe mit Löschgaswirkung, wie Aluminiumoxidhydrate (siehe: "J. Fire and Flammability", Vol. 3 (1972), Seiten 51 ff.), basische Aluminiumcarbonate (siehe: "Plast. Engng.", Vol. 32 (1976), Seiten 41 ff.) und Magnesiumhydroxide (EP-OS 0 243 201), oder verglasende Füllstoffe, wie Borate (siehe: "Modern Plastics", Vol. 47 (1970), Seiten 140 ff.) und Phosphate (US-PS 2 766 139 und US-PS 3 398 019). Allen diesen Füllstoffen haftet aber der Nachteil an, daß sie die mechanischen, chemischen und elektrischen Eigenschaften der Formstoffe zum Teil erheblich verschlechtern. Außerdem verschlechtern sie die Verarbeitungseigenschaften der Gießharze (Abrasivität, Basizität) teilweise drastisch. Bei OX/ICR-Formstoffen ist wegen der erforderlichen hohen Nachhärtetemperaturen von bis zu 200°C ferner die Löschgasabspaltung bereits während der Formstoffherstellung zu befürchten.

Für Epoxidharze wurden auch schon organische Phosphorverbindungen, wie Phosphorsäureester, Phosphonsäureester und Phosphine als flammhemmende Additive vorgeschlagen (siehe: W.C. Kuryla und A.J. Papa "Flame Retardancy of Polymeric Materials", Vol. 1, Seiten 24 bis 38 und 52 bis 61, Marcel Dekker Inc., New York, 1973). Da diese Verbindungen für ihre "weichmachenden" Eigenschaften bekannt sind und als Weichmacher für Polymere weltweit in großem Maßstab verwendet werden (siehe GB-PS 10 794), ist aber auch diese Alternative hinsichtlich der geforderten Wärmebeständigkeit von Formstoffen wenig erfolgversprechend.

Aufgabe der Erfindung ist es, hitzehärtbare Reaktionsharzmischungen (auf der Basis von EP/IC-Harzen) anzugeben, die - aufgrund einer niedrigen Viskosität bei Verarbeitungstemperatur und einer hohen Lagerstabilität - gute Verarbeitungseigenschaften aufweisen und kostengünstig nach herkömmlichen Verfahren zur Verarbeitung von Gießharzen in Reaktionsharzformstoffe übergeführt werden können, die inhärent, d.h. ohne den Zusatz von Halogenverbindungen oder Antimontrioxid, schwerbrennbar und somit entsprechend UL 94V nach V-O einzustufen sind, ohne daß die hohe Wärmeformbeständigkeit sowie die guten elektrischen und mechanischen Eigenschaften, die OX/ICR-Formstoffe aufweisen, negativ beeinflußt werden.

Dies wird erfindungsgemäß dadurch erreicht, daß die Reaktionsharzmischungen folgende Komponenten enthalten:
(A) ein phosphorfreies polyfunktionelles Epoxid,
(B) eine epoxidgruppenhaltige Phosphorverbindung folgender Struktur: 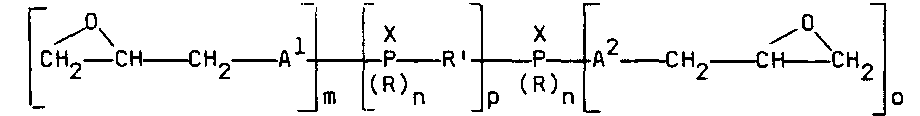 mit m = 0 oder 1, n = 0, 1 oder 2 und o = 1, 2 oder 3, wobei folgendes gilt: m + n + o = 3, und mit p = 0, 1 oder 2;
   - X: bedeutet ein freies Elektronenpaar oder ein über eine Doppelbindung gebundenes 0- oder S-Atom,
   - R: bedeutet einen direkt oder über 0 oder S gebundenen Alkylrest mit 1 bis 4 C-Atomen, einen Alkenylrest mit 2 bis 3 C-Atomen, einen Arylrest, wie Phenyl, Alkoxyphenyl, Nitrophenyl, Naphthyl und Biphenyl, einen Aralkylrest, wie Benzyl, einen Dialkylamino- oder Alkylarylaminorest oder einen 3-Trialkylsilyl-propylrest,
   - R': bedeutet eine Brücke aus O, S, Phenylen, Dioxyphenylen, Dioxynaphthylen, (CH₂)ᵣ, O-(CH₂)ᵣ, O-(CH₂)ᵣ-O oder O-(CH₂)ᵣ-(Si(CH₃)₂-O)ₛ-Si(CH₃)₂-(CH₂)ᵣ-O mit r = 1 bis 3 und s = 1 bis 8, oder (O-CH₂-CH₂)ₜ-O, (O-CH(CH₃)-CH₂)ₜ-O oder (O-(CH₂)₄)ₜ-O mit t = 2 bis 100, und
   - A¹ und A²,: die gleich oder verschieden sein können, bedeuten eine Einfachbindung oder eine Brücke entsprechend der Gruppierung R',
(C) ein polyfunktionelles Isocyanat,
(D) einen Härtungskatalysator und gegebenenfalls
(E) Füllstoff.

Die erfindungsgemäßen Reaktionsharzmischungen sind lösungsmittelfreie und dennoch niedrigviskose, gieß- und imprägnierfähige EP/IC-Harze, die kostengünstig verarbeitet werden können. Durch Härtung dieser Harze bei Temperaturen bis zu 200°C werden schwerbrennbare OX/ICR-Formstoffe mit der Einstufung UL 94V-0 erhalten. Diese Formstoffe, bei denen es sich um sogenannte FRNC-Formstoffe handelt (FRNC = Flame Retardant Non Corrosive), weisen ausgezeichnete mechanische Eigenschaften bei gleichzeitig hoher Wärmeformbeständigkeit auf. Außerdem werden bei diesen Formstoffen die elektrischen Eigenschaften durch die Phosphorverbindung nicht negativ beeinflußt.

Als polyfunktionelles Epoxid, d.h. Polyglycidylverbindung, sind relativ niedrigviskose aliphatische, cycloaliphatische oder aromatische Epoxide sowie deren Mischungen besonders gut geeignet. Bevorzugt werden folgende Verbindungen: Bisphenol-A-diglycidylether, Bisphenol-F-diglycidylether, 3.4-Epoxycyclohexylmethyl-3'.4'-epoxycyclohexancarboxylat, Polyglycidylether von Phenol-Formaldehyd- und Kresol-Formaldehyd-Novolaken, Diglycidylester von Phthal-, Isophthal- und Terephthalsäure sowie Mischungen aus derartigen Epoxidharzen. Weitere geeignete Polyepoxide sind beispielsweise hydrierte Bisphenol-A- bzw. Bisphenol-F-diglycidylether, Hydantoinepoxidharze, Triglycidylisocyanurat, Triglycidyl-p-aminophenol, Tetraglycidyldiaminodiphenylmethan, Tetraglycidyldiaminodiphenylether, Tetrakis(4-glycidoxyphenyl)-ethan, Urazolepoxide und Epoxide, die im "Handbook of Epoxy Resins" ( McGraw-Hill Book Company, 1967) von Henry Lee und Kris Neville und in der Monographie "Epoxy Resins" (American Chemical Society, 1970) von Henry Lee beschrieben sind.

Auch die Komponente (B) kann sowohl in Form einzelner Verbindungen als auch in Form eines Gemisches mehrerer Verbindungen zum Einsatz gelangen, wobei Verbindungen mit geringer Viskosität (< 500 mPa.s bei Raumtemperatur) bevorzugt werden. Als Komponente (B) eignen sich beispielsweise: Methyl-diglycidyl-phosphonat, Ethyl-diglycidyl-phosphonat, Propyl-diglycidyl-phosphonat, Butyl-diglycidyl-phosphonat, Vinyl-diglycidyl-phosphonat, Phenyl-diglycidyl-phosphonat und Biphenyl-diglycidyl-phosphonat; Methyl-diglycidyl-phosphat, Ethyl-diglycidyl-phosphat, n-Propyl-diglycidyl-phosphat, n-Butyl-diglycidyl-phosphat, Isobutyl-diglycidyl-phosphat, Allyl-diglycidyl-phosphat, Phenyldiglycidyl-phosphat, p-Methoxyphenyl-diglycidyl-phosphat, p-Ethoxyphenyl-diglycidyl-phosphat, p-Propyloxyphenyl-diglycidylphosphat, p-Isopropyloxyphenyl-diglycidyl-phosphat, Phenylthiodiglycidyl-phosphat, Triglycidyl-phosphat, Tris(glycidylethyl)phosphat, p-Glycidylphenyl-ethyl-glycidyl-phosphat und Benzyldiglycidyl-thiophosphat.

Die Synthese dieser Verbindungen erfolgt beispielsweise durch Umsetzung von Phosphonsäure- oder Phosphorsäurechloriden mit Glycidol (siehe: "Zh. Obshch. Khim.", Bd. 54, Heft 10 (1984), Seiten 2404 ff.), durch Umsetzung von Phosphorsäure oder Phosphonsäuren mit Epichlorhydrin (JP-OS 51-143620) oder durch Epoxidierung von Phosphorverbindungen, die Reste mit olefinischen Doppelbindungen enthalten (US-PS 2 856 369).

Als polyfunktionelle Isocyanate, d.h. Komponente (C), sind relativ niedrigviskose aliphatische, cycloaliphatische oder aromatische Polyisocyanate sowie deren Mischungen besonders gut geeignet. Bevorzugt werden folgende Verbindungen: Isomerengemische aus 4.4'- und 2.4'-Diphenylmethandiisocyanat, polyolmodifizierte Polyisocyanate und Gemische von flüssigen Polyisocyanaten mit höhermolekularen Polyisocyanaten oder CarbodiimidPolyisocyanaten. Weitere geeignete Polyisocyanate sind beispielsweise: Hexan-1.6-diisocyanat, Cyclohexan-1.3-diisocyanat und Isomere davon, 4.4'-Dicyclohexylmethandiisocyanat, 3-Isocyanatomethyl-3.5.5-trimethylcyclohexylisocyanat, 1-Methylbenzol-2.4-diisocyanat und Isomere davon, Naphthalin-1.4-diisocyanat, Diphenylether-4.4'-diisocyanat und Isomere davon, Diphenylsulfon-4.4'-diisocyanat und Isomere davon sowie tri- oder höherfunktionelle Isocyanate, wie 3.3'.4.4'-Diphenylmethantetraisocyanat. Ferner können auch Isocyanate verwendet werden, die in üblicher Weise mit Phenol oder Kresol maskiert sind. Dimere und Trimere der genannten mehrwertigen Isocyanate sind ebenfalls einsetzbar. Derartige Polyisocyanate besitzen endständige freie Isocyanatgruppen und enthalten einen oder mehrere Uretdion- und/oder Isocyanuratringe. Verfahren zur Herstellung verschiedener Arten solcher Trimerer und Uretdione sind beispielsweise in den US-Patentschriften 3 494 888, 3 108 100 und 2 977 370 beschrieben.

Das Mischungsverhältnis der Epoxid-Komponenten (A) und (B) einerseits und der Isocyanat-Komponente (C) andererseits kann in weitem Rahmen variieren, und zwar je nachdem welche thermisch-mechanischen Eigenschaften der Formstoffe angestrebt werden. Bevorzugt sind jedoch EP:IC-Verhältnisse zwischen 1:5 und 5:1, bezogen auf das Molverhältnis der Epoxid- und Isocyanatfunktionen. Bei EP:IC-Verhältnissen mit einem höheren IC-Überschuß als 1:5 werden zwar Formstoffe mit sehr hohen Glasübergangstemperaturen, jedoch mit unbefriedigenden mechanischen Eigenschaften erhalten. Bei einem hohen Epoxidüberschuß erhält man Formstoffe mit ungenügenden thermisch-mechanischen Eigenschaften. Auch das Mischungsverhältnis der Epoxid-Komponenten (A) und (B) untereinander läßt sich entsprechend dem gewünschten Eigenschaftsspektrum in einem breiten Bereich variieren. Vorteilhaft beträgt das Mischungsverhältnis von (A) zu (B) 1:4 bis 4:1, vorzugsweise 1:2 bis 2:1, jeweils bezogen auf das Molverhältnis der Epoxidfunktionen.

Die erfindungsgemäßen Reaktionsharzmischungen können auch Komponenten enthalten, die im allgemeinen an den chemischen Reaktionen, die zu den OX/ICR-Formstoffen führen, nicht beteiligt sind, nämlich Füllstoffe. Als Füllstoffe eignen sich mineralische und faserförmige Stoffe, wie Quarzmehl, Quarzgut, Aluminiumoxid, Glaspulver, Glimmer, Kaolin, Dolomit, Graphit und Ruß sowie Kohlefasern, Glasfasern und Textilfasern. Der Füllstoffanteil kann in den erfindungsgemäßen Reaktionsharzmischungen bis zu 70 Masse-% betragen. Farbstoffe, Stabilisatoren und Haftvermittler sowie andere Additive üblicher Art können den EP/IC-Harzen ebenfalls zugesetzt werden.

Bei den Reaktionsharzmischungen nach der Erfindung spielt der bei der Vernetzung die OX- und ICR-Ringbildung fördernde Härtungskatalysator eine bedeutende Rolle. Im allgemeinen werden dabei tertiäre Amine oder Imidazole als Katalysatoren eingesetzt. Als tertiäre Amine eignen sich beispielsweise folgende Verbindungen. Tetramethylethylendiamin, Dimethyloctylamin, Dimethylaminoethanol, Dimethylbenzylamin, 2.4.6-Tris(dimethylaminomethyl)-phenol, N.N'-Tetramethyldiaminodiphenylmethan, N.N'-Dimethylpiperazin, N-Methylmorpholin, N-Methylpiperidin, N-Ethylpyrrolidin, 1.4-Diazabicyclo-2.2.2-octan und Chinoline. Geeignete Imidazole sind beispielsweise: 1-Methylimidazol, 2-Methylimidazol, 1.2.4.5-Tetramethylimidazol, 1-Benzyl-2-phenylimidazol, 2-Undecylimidazol, 2-Heptadecylimidazol, 2-Ethyl-4-methylimidazol, 1-Cyanoethyl-2-ethyl-4-methylimidazol und 1-Cyanoethyl-2-phenylimidazol.

Die genannten Härtungskatalysatoren reagieren allerdings schon bei niederen Temperaturen und führen so zu relativ kurzen Topfzeiten, was die Verarbeitung der EP/IC-Harze erschweren kann. Bevorzugt werden deshalb latente Härtungskatalysatoren eingesetzt, die bei niederen Temperaturen eine ausreichende Gebrauchsdauer gewährleisten. Als derartige Katalysatoren, die auch als latente Reaktionsbeschleuniger bezeichnet werden, eignen sich insbesondere Additionskomplexe von Bortrihalogeniden mit tertiären Aminen und Imidazolen, beispielsweise die in der DE-PS 26 55 367 beschriebenen Additionskomplexe aus Bortrichlorid und tertiären Aminen der allgemeinen Formel BCl₃.NR¹R²R³, in der R¹, R² und R³ gleiche oder verschiedene aliphatische, aromatische, heterocyclische oder arylaliphatische Reste sind, die paarweise auch Bestandteil von heterocyclischen Ringen sein können. Geeignet sind auch die analogen Komplexe des Bortrifluorids der allgemeinen Formel BF₃.NR¹R²R³, wobei R¹, R² und R³ die vorstehend angegebene Bedeutung haben. Spezielle Beispiele für geeignete tertiäre Amine der BF₃- und BCl₃-Komplexe sind Octyldimethylamin und Benzyldimethylamin. Auch Morpholinverbindungen und Imidazole, insbesondere N-Methylmorpholin, 1.2-Dimethylimidazol und 1-Benzyl-2-phenylimidazol, sind zur Bildung von BCl₃- bzw. BF₃-Komplexen geeignet.

Als Härtungskatalysatoren für die erfindungsgemäßen Reaktionsharzmischungen eignen sich ferner vorteilhaft Oniumsalze von tertiären Aminen und Imidazolen, d.h. Oniumsalze mit N als Zentralatom. Beispiele für geeignete Oniumsalze sind: Tetraethylammoniumchlorid, Tetraethylammoniumbromid, Octyltrimethylammoniumbromid, Benzyltrimethylammoniumchlorid, N-Ethylmorpholiniumbromid, 2-Ethyl-4-methylimidazoliumbromid, N-Ethylmorpholiniumtetraphenylborat, 1.2-Dimethylimidazoliumtetraphenylborat und Tetrabutylammoniumtetraphenylborat.

Der Gehalt des Härtungskatalysators in den EP/IC-Harzen beträgt vorteilhaft 0,01 bis 5 Masse-%, vorzugsweise 0,25 bis 2,5 Masse-%, jeweils bezogen auf die Masse der Harzmatrix. Durch die Art und durch die Konzentration des Härtungskatalysators kann im übrigen die Härtungstemperatur beeinflußt werden, die etwa zwischen 50°C und 200°C liegt. Erforderlichenfalls kann mit der Härtung bzw. Gelierung aber auch bereits bei Raumtemperatur begonnen werden.

Die erfindungsgemäßen Reaktionsharzmischungen können nach den in der Elektrotechnik üblichen Methoden zur Verarbeitung von Epoxidharzen, wie Vakuumverguß oder Niederdruck-Spritzgußverfahren, verarbeitet werden. Diese Reaktionsharzmischungen eignen sich insbesondere zum Vergießen und Umhüllen von elektronischen Bauelementen, für Wicklungsisolierungen und zur Herstellung von Isolierbauteilen sowie zur Verwendung in der Leiterplattentechnik und zur Herstellung von Laminaten.

Anhand von Ausführungsbeispielen soll die Erfindung noch näher erläutert werden.

### Beispiel 1

Eine Mischung aus A Masseteilen (MT) eines Bisphenol-F-diglycidylethers (EP-Wert: 0,61 mol/100 g), C MT eines bei Raumtemperatur flüssigen Isomerengemisches von Diphenylmethandiisocyanat (IC-Wert: 0,79 mol/100 g) und E MT Quarzmehl (16900 Maschen/ cm²) wird 4 h bei einer Temperatur von 80°C und einem Druck < 1 mbar unter Rühren entgast. Anschließend wird auf 50°C abgekühlt, dann werden B MT Phenyl-diglycidyl-phosphonat (EP-Wert: 0,72 mol/100 g) und D MT des BCl₃-Adduktes von Dimethylbenzylamin zugegeben. Das Gemisch wird bei 50°C weitere 2 h bei einem Druck < 1 mbar unter Rühren entgast und anschließend unter Druck (3 bar) in eine auf 150°C vorgeheizte Normstabform gegossen. Nach 10 min wird entformt und dann 8 h bei 150°C und 16 h bei-200°C nachgetempert. Die Zusammensetzung der verschiedenen untersuchten Mischungen ist in Tabelle 1 angegeben. In Tabelle 2 sind die Biegefestigkeit, die Schlagzähigkeit und die Glasübergangstemperatur wiedergegeben, die an den erhaltenen Normkörpern bestimmt wurden.

Zur Herstellung von 1,6 mm dicken Probekörpern für die Brennprüfung nach UL 94V werden 1,6 mm dicke Platten in der Weise hergestellt, daß die aufbereiteten Harzmassen in eine auf 120°C vorgeheizte Form von Vakuum in Vakuum vergossen und 1 h bei 120°C, 8 h bei 150°C und 16 h bei 200°C getempert werden. Die für die Brennprüfung nach UL 94V benötigten Probestäbe werden aus den Platten gesägt. Die ermittelten Brennzeiten sowie die Einstufung nach UL 94V finden sich ebenfalls in Tabelle 2.

**Tabelle 1:**

| Mischungszusammensetzung | | | | | |
|---|---|---|---|---|---|
| Mischung Komponenten: | 1 | 2 | 3 | 4 | 5 |
| A (MT) | 246 | 163 | 197 | 328 | 60 |
| B (MT) | - | 72 | 42 | 138 | 52 |
| C (MT) | 190 | 190 | 190 | 190 | 190 |
| D (MT) | 4,4 | 4,2 | 4,3 | 6,6 | 3,0 |
| E (MT) | 854 | 830 | 841 | 1286 | 592 |

| Verhältnis: | | | | | |
|---|---|---|---|---|---|
| (A):(B) (mol/mol) | | 2:1 | 4:1 | 2:1 | 1:1 |
| EP:IC (mol/mol) | 1:1 | 1:1 | 1:1 | 2:1 | 1:2 |

**Tabelle 2:**

| Eigenschaften der OX/ICR-Formstoffe | | | | | |
|---|---|---|---|---|---|
| Formstoff Eigenschaften: | 1 | 2 | 3 | 4 | 5 |
| Biegefestigkeit (N/mm²) | 130 | 127 | 128 | 140 | 105 |
| Schlagzähigkeit (Nmm/mm²) | 11,5 | 9,6 | 11,4 | 14,2 | 8,1 |
| Glasübergangstemperatur (°C) | 225 | 229 | 220 | 195 | 264 |
| mittlere Brenndauer (s) | >45 | 4,0 | 4,8 | 4,7 | 3,2 |
| Einstufung nach UL 94V | nicht möglich | V-0 | V-0 | V-0 | V-0 |

### Beispiel 2

Die in Tabelle 3 angegebenen Mengen von Bisphenol-A-diglycidylether (Komponente A; EP-Wert: 0,57 mol/100 g), eines flüssigen Isomerengemisches von Diphenylmethandiisocyanat (Komponente C; IC-Wert: 0,79 mol/100 g), des Bortrichlorid-Komplexes von Dimethylbenzylamin (Komponente D) und von Quarzmehl (Komponente E; 16900 Maschen/cm²) werden mit verschiedenen Glycidylphosphorverbindungen (Verhältnis von Glycidylphosphorverbindung zu Bisphenol-A-diglycidylether = 1:2 mol/mol, bezogen auf den Gehalt an Epoxidgruppen) versetzt und die Mischungen wie in Beispiel 1 aufbereitet. Alle Mischungen enthalten äquimolare Mengen an Epoxidverbindungen und Isocyanatverbindungen. Die an Prüfkörpern bestimmten mechanischen Eigenschaften sowie die Brennzeiten und die Einstufung nach UL 94V sind in Tabelle 4 zusammengefaßt.

**Tabelle 3:**

| Mischungszusammensetzung | | | | |
|---|---|---|---|---|
| Mischung Komponenten: | 6 | 7 | 8 | 9 |
| A (MT) | 175 | 175 | 175 | 175 |
| C (MT) | 190 | 190 | 190 | 190 |
| D (MT) | 4,2 | 4,2 | 4,4 | 4,1 |
| E (MT) | 820 | 825 | 855 | 804 |
| Methyl-diglycidyl-phosphonat (MT) | 52 | - | - | - |
| Methyl-diglycidyl-phosphat (MT) | - | 56 | - | - |
| Phenyl-diglycidyl-phosphonat (MT) | - | - | 71 | - |
| Triglycidyl-phosphat (MT) | - | - | - | 45 |

**Tabelle 4:**

| Eigenschaften der OX/ICR-Formstoffe | | | | |
|---|---|---|---|---|
| Formstoff Eigenschaften: | 6 | 7 | 8 | 9 |
| Biegefestigkeit (N/mm²) | 130 | 125 | 122 | 115 |
| Schlagzähigkeit (Nmm/mm²) | 12,1 | 10,2 | 11,5 | 9,1 |
| Glasübergangstemperatur (°C) | 220 | 210 | 232 | 244 |
| mittlere Brenndauer (s) | 4,5 | 4,5 | 2,9 | 4,9 |
| Einstufung nach UL 94V | V-0 | V-0 | V-0 | V-0 |

### Beispiel 3

Von den EP/IC-Harzmischungen 1 und 2 (siehe Beispiel 1) wurde die Gebrauchsdauer bestimmt. Dazu wurden die Harzmischungen wie beschrieben gemischt und aufbereitet und anschließend wurde in einem Haake-Rotovisko SV 1 (Zylinder-Meßkörper) bei 50°C der Viskositätsverlauf in Abhängigkeit von der Zeit verfolgt. Ein Vergleich zeigt, daß durch die in Mischung 2 verwendete Glycidylphosphorverbindung die Gießharzviskosität beträchtlich reduziert wird, und zwar von ca. 7600 mPa.s auf ca. 2050 mPa.s; dadurch wird die Verarbeitbarkeit verbessert. Außerdem erfolgt innerhalb von 4 h bei Verarbeitungstemperatur (50°C) kein Viskositätsaufbau. Damit sind die erfindungsgemäßen Reaktionsharzmischungen problemlos verarbeitbar.

## Patentansprüche

1. Hitzehärtbare Reaktionsharzmischungen, **dadurch gekennzeichnet,** daß sie folgende Komponenten enthalten:
(A) ein phosphorfreies polyfunktionelles Epoxid,
(B) eine epoxidgruppenhaltige Phosphorverbindung folgender Struktur: 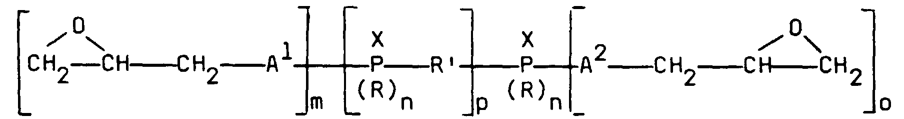 mit m = 0 oder 1, n = 0, 1 oder 2 und o = 1, 2 oder 3, wobei folgendes gilt: m + n + o = 3, und mit p = 0, 1 oder 2;
X bedeutet ein freies Elektronenpaar oder ein über eine Doppelbindung gebundenes O- oder S-Atom,
R bedeutet einen direkt oder über O oder S gebundenen Alkylrest mit 1 bis 4 C-Atomen, Alkenylrest mit 2 bis 3 C-Atomen, Arylrest, Aralkylrest, Dialkylamino- oder Alkylarylaminorest oder 3-Trialkylsilyl-propylrest,
R' bedeutet eine Brücke aus O, S, Phenylen, Dioxyphenylen, Dioxynaphthylen, (CH₂)ᵣ, O-(CH₂)ᵣ, O-(CH₂)ᵣ-O oder O-(CH₂)ᵣ-(Si(CH₃)₂-O)ₛ-Si(CH₃)₂-(CH₂)ᵣ-O mit r = 1 bis 3 und s = 1 bis 8, oder (O-CH₂-CH₂)ₜ-O, (O-CH(CH₃)-CH₂)ₜ-O oder (O-(CH₂)₄)ₜ-O mit t = 2 bis 100, und
A¹ und A², die gleich oder verschieden sein können, bedeuten eine Einfachbindung oder eine Brücke entsprechend der Gruppierung R',
(C) ein polyfunktionelles Isocyanat,
(D) einen Härtungskatalysator und gegebenenfalls
(E) Füllstoff.

2. Reaktionsharzmischungen nach Anspruch 1, **dadurch gekennzeichnet,** daß die Komponente (B) ein Di- oder Triglycidylester der Phosphorsäure oder ein Gemisch dieser Verbindungen ist.

3. Reaktionsharzmischungen nach Anspruch 1, **dadurch gekennzeichnet,** daß die Komponente (B) ein Diglycidylester einer Alkyl- oder Arylphosphonsäure oder ein Gemisch dieser Verbindungen ist.

4. Reaktionsharzmischungen nach Anspruch 1, **dadurch gekennzeichnet,** daß die Komponente (B) ein Di- oder Triglycidylether eines Alkyl- oder Arylphosphinoxids oder ein Gemisch dieser Verbindungen ist.

5. Reaktionsharzmischungen nach einem der Ansprüche 1 bis 4, **dadurch gekennzeichnet,** daß das Molverhältnis von Epoxid- zu Isocyanatgruppen zwischen 1:5 und 5:1 beträgt.

6. Reaktionsharzmischungen nach einem oder mehreren der Ansprüche- 1 bis 5, **dadurch gekennzeichnet,** daß das Molverhältnis der Epoxidfunktionen der Komponenten (A) und (B) 1:4 bis 4:1 beträgt, vorzugsweise 1:2 bis 2:1.

7. Reaktionsharzmischungen nach einem oder mehreren der Ansprüche 1 bis 6, **dadurch gekennzeichnet,** daß der Härtungskatalysator ein Additionskomplex oder ein Oniumsalz eines tertiären Amins oder eines Imidazols ist.

8. Reaktionsharzmischungen nach einem oder mehreren der Ansprüche 1 bis 7, **dadurch gekennzeichnet,** daß der Gehalt des Härtungskatalysators 0,01 bis 5 Masse-% beträgt, vorzugsweise 0,25 bis 2,5 Masse-%, jeweils bezogen auf die Harzmatrix.

9. Reaktionsharzmischungen nach einem oder mehreren der Ansprüche 1 bis 8, **dadurch gekennzeichnet,** daß sie als Füllstoff Quarzmehl, Quarzgut, Aluminiumoxid oder Dolomit enthalten.

10. Reaktionsharzformstoffe, hergestellt aus Reaktionsharzmischungen nach einem oder mehreren der Ansprüche 1 bis 9.

## Claims

1. Heat-curable reaction resin mixtures, characterised in that they contain the following components:
(A) a phosphorus-free, polyfunctional epoxide;
(B) an epoxide-group-containing phosphorus compound having the following structure: 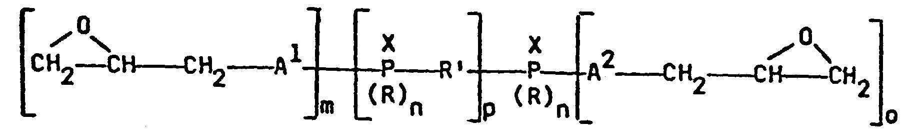 with m = 0 or 1, n = 0, 1 or 2 and o = 1, 2 or 3, where the following applies: m + n + o = 3, and with p = 0, 1 or 2;
X signifies a free electron pair or an O-atom or S-atom bonded by way of a double bond,
R signifies an alkyl residue having 1 to 4 C atoms, which is bonded directly or by way of O or S, an alkenyl residue having 2 to 3 C atoms, aryl residue, aralkyl residue, dialkyl-amino residue or alkyl-aryl-amino residue or 3-trialkylsilyl-propyl residue,
R' denotes a bridge of O, S, phenylene, dioxyphenylene, dioxynaphthylene, (CH₂)ᵣ, O-(CH₂)ᵣ, O-(CH₂)ᵣ-O or O-(CH₂)ᵣ-(Si(CH₃)₂-O)ₛ-Si(CH₃)₂-(CH₂)ᵣ-O with r = 1 to 3 and s = 1 to 8, or (O-CH₂-CH₂)ₜ-O, (O-CH(CH₃)-CH₂)ₜ-O or (O-(CH₂)₄)ₜ-O with t = 2 to 100; and
A¹ and A², which can be the same or different, signify a single bond or a bridge according to the grouping R';
(C) a polyfunctional isocyanate,
(D) a curing catalyst, and, if appropriate,
(E) filler.

2. Reaction resin mixtures according to claim 1, characterised in that the component (B) is a diglycidyl ester or triglycidyl ester of phosphoric acid or a mixture of these compounds.

3. Reaction resin mixtures according to claim 1, characterised in that the component (B) is a diglycidylester of an alkyl phosphonic acid or aryl phosphonic acid or a mixture of these compounds.

4. Reaction resin mixtures according to claim 1, characterised in that the component (B) is a diglycidylether or triglycidylether of an alkyl phosphine oxide or aryl phosphine oxide or a mixture of these compounds.

5. Reaction resin mixtures according to one of the claims 1 to 4, characterised in that the molar ratio of epoxide groups to isocyanate groups amounts to between 1:5 and 5:1.

6. Reaction resin mixtures according to one or more of the claims 1 to 5, characterised in that the molar ratio of the epoxide functions of the components (A) and (B) amounts to 1:4 to 4:1, preferably 1:2 to 2:1.

7. Reaction resin mixtures according to one or more of the claims 1 to 6, characterised in that the curing catalyst is an addition complex or an onium salt of a tertiary amine or an imidazole.

8. Reaction resin mixtures according to one or more of the claims 1 to 7, characterised in that the content of the curing catalyst amounts to 0.01 to 5% by mass, preferably 0.25 to 2.5% by mass, in each case with respect to the resinous matrix.

9. Reaction resin mixtures according to one or more of the claims 1 to 8, characterised in that they contain as a filler quartz powder, quartz ware, aluminium oxide or dolomite. moulded

10. Reaction resin moulded materials, prepared from reaction resin mixtures according to one or more of the claims 1 to 9.

## Revendications

1. Mélanges de résine de réaction thermodurcissable, caractérisés en ce qu'ils contiennent les composants suivants :
(A) un époxyde polyfonctionnel exempt de phosphore,
(B) un composé de phosphore contenant des groupes époxyde, répondant à la structure suivante : 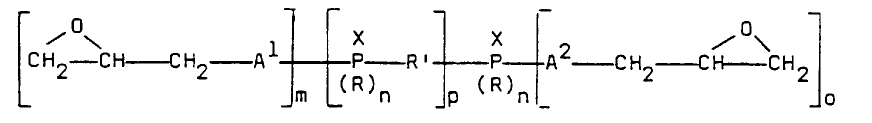 avec m = 0 ou 1, n = 0, 1 ou 2 et o = 1, 2 ou 3, sous réserve que : m + n + o = 3, et avec p = 0, 1 ou 2;
X représente une paire d'électrons libre ou un atome O ou S lié par une double liaison,
R représente un résidu, lié directement ou par l'intermédiaire d'un atome O ou S, d'alkyle avec 1 à 4 atomes de carbone, d'alcényle avec 2 à 3 atomes de carbone, d'aryle, d'arylalkyle, de dialkylamino ou d'alkylarylamino ou de 3-trialkylsilyl-propyle,
R' représente un pont de O, de S, de phénylène, de dioxyphénylène, de dioxynaphtylène, de (CH₂)ᵣ, de O-(CH₂)ᵣ, de O-(CH₂)ᵣ-O ou de O-(CH₂)ᵣ-(Si(CH₃)₂-O)ₛ-Si(CH₃)₂-(CH₂)ᵣ-O avec r = 1 à 3 et s = 1 à 8, ou de (O-CH₂-CH₂)ₜ-O, de (O-CH(CH₃)-CH₂)ₜ-O ou de (O-(CH₂)₄)ₜ-O avec t = 2 à 100, et
A¹ et A², qui peuvent être identiques ou différents, représentent une simple liaison ou un pont correspondant au groupement R',
(C) un isocyanate polyfonctionnel,
(D) un catalyseur de durcissement et éventuellement
(E) une matière de charge.

2. Mélanges de résine de réaction selon la revendication 1, caractérisés en ce que le composant (B) est un ester di- ou triglycidylique de l'acide phosphorique ou un mélange de ces composés.

3. Mélanges de résine de réaction selon la revendication 1, caractérisés en ce que le composant (B) est un ester diglycidylique d'un acide alkyl- ou arylphosphonique ou un mélange de ces composés.

4. Mélanges de résine de réaction selon la revendication 1, caractérisés en ce que le composant (B) est un ester di- ou triglycidylique d'un oxyde alkyl- ou arylphosphinique ou un mélange de ces composés.

5. Mélanges de résine de réaction selon l'une des revendications 1 à 4, caractérisés en ce que le rapport molaire des groupes époxyde aux groupes isocyanates vaut entre 1 : 5 et 5 : 1.

6. Mélanges de résine de réaction selon une ou plusieurs des revendications 1 à 5, caractérisés en ce que le rapport molaire des fonctions époxyde des composants (A) et (B) vaut 1 : 4 à 4 : 1, de préférence 1 : 2 à 2 : 1.

7. Mélanges de résine de réaction selon une ou plusieurs des revendications 1 à 6, caractérisés en ce que le catalyseur de durcissement est un complexe d'addition ou un sel d'onium d'une amine tertiaire ou d'un imidazole.

8. Mélanges de résine de réaction selon une ou plusieurs des revendications 1 à 7, caractérisés en ce que la teneur du catalyseur de durcissement vaut 0,01 à 5 % massiques, de préférence 0,25 à 2,5 % massiques, respectivement par rapport à la matrice de résine.

9. Mélanges de résine de réaction selon une ou plusieurs des revendications 1 à 8, caractérisés en ce qu'ils contiennent à titre de matière de charge de la poudre de quartz, de la silice vitreuse, de l'oxyde d'aluminium ou de la dolomie.

10. Produits moulés en résine de réaction, fabriqués à partir de mélanges de résine de réaction selon une ou plusieurs des revendications 1 à 9.
